# EUROPÄISCHE PATENTSCHRIFT

(11) **EP 0 814 056 B1**
(45) Veröffentlichungstag und Bekanntmachung des Hinweises auf die Patenterteilung: **27.03.2002**
(21) Anmeldenummer: 97109639.1
(22) Anmeldetag: 13.06.1997
(51) Int. Cl.: C01B 31/10

(54) **Verfahren zur Herstellung von körniger Aktivkohle**
Process for manufacturing activated carbon
Procédé de préparation de charbon actif granulaire

(30) Priorität: 22.06.1996 DE 19625069
(43) Veröffentlichungstag der Anmeldung: 29.12.1997
(73) Patentinhaber: MHB Filtration GmbH & CO. KG, 40699 Erkrath (DE)
(72) Erfinder: von Blücher, Hasso, 40699 Erkrath (DE); de Ruiter, Ernest, Dr., 51381 Leverkusen (DE)
(74) Vertreter: Voth, Gerhard

(56) Entgegenhaltungen:
- EP-A- 0 326 271
- DD-A- 63 768
- DE-A- 19 600 237
- FR-A- 2 322 876
- FR-A- 2 687 941
- CHEMICAL ABSTRACTS, vol. 107, no. 26, 28.Dezember 1987 Columbus, Ohio, US; abstract no. 239318, OKIDO SADAO & AL.: "Carbonization of synthetic resin" XP002040873 & JP 62 197 308 A (JAPAN ORGANO CO., LTD; KURARAY CHEMICAL CO., LTD)
- CHEMICAL ABSTRACTS, vol. 89, no. 22, 27.November 1978 Columbus, Ohio, US; abstract no. 181873, MURAKAMI YOSHIAKI & AL.: "Granular activated carbon" XP002040874 & JP 53 050 088 A (SUMITOMO CHEMICAL CO., LTD) 8.Mai 1978
- CHEMICAL ABSTRACTS, vol. 110, no. 10, 6.März 1989 Columbus, Ohio, US; abstract no. 76950, ARTYUSHENKO V. V. & AL: "Activation of styrene-divinylbenzene copolymer in a fluidized bed" XP002040969 & KHIM. TEKHNOL., Nr. 6, 1988, Seiten 45-51,
- CHEMICAL ABSTRACTS, vol. 123, no. 14, 2.Oktober 1995 Columbus, Ohio, US; abstract no. 174149, SENTEK JAN & AL.: "Production of carbon sorbent for hemoperfusion" XP002040970 & PL 159 545 A (POLITECHNIKA WARSZAWSKA) 31.Dezember 1992

## Beschreibung

Die vorliegende Erfindung betrifft ein Verfahren zur Herstellung kömiger Aktivkohle.

Die Patentanmeldung DE 196 00 237 beschreibt ein Verfahren, lonenaustauscher oder deren noch keine funktionelle Gruppen enthaltenden Vorstufen in hochwertige Adsorbentien auf Kohlebasis umzusetzen. Besonders geeignet sind Polymerkügelchen auf Basis von Styrol und etwas Divinylbenzol.

Das Verfahren besteht darin, dass bereits zu Beginn des Carbonisierungsprozesses Schwefelsäure zugesetzt wird, die das Zusammenbacken und Aufplatzen der Polymerkügelchen verhindert und eine deutliche Erhöhung der Ausbeute bewirkt. Die Schwefelsäure führt zu einer Sulfonierung der Aromatenringe mit Ausbildung von SO₃H-Gruppen und deren Zersetzung mit anschließender Vernetzung über Radikale und Schwefelbrücken. Das Ausgangsmaterial kann dabei in makroporöser oder gelförmiger Form vorliegen.

Da bei der Sulfonierung gemäß der Gleichung

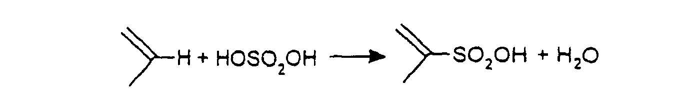

Wasser entsteht, das die Reaktion verlangsamen würde, ist es wichtig, das gebildete Wasser kontinuierlich auszutragen. Dies kann beispielsweise durch einen Sticksoffstrom erfolgen.

Eine vollständige Sulfonierung ist aus verschiedenen Gründen wichtig. Eine unvollständige Sulfonierung der Polymerkügelchen führt zu einer unzureichenden Vernetzung, insbesondere im Inneren der Kügelchen, so dass es leicht zur Abspaltung von Monomeren und somit zu Gasausbrüchen kommt, die die äußere Schale der Kügelchen aufplatzen lassen.

Das Aufplatzen läßt sich zwar durch besondere Temperaturprogramme verhindern, aber man erhält trotzdem Produkte mit geringerem Schüttgewicht, weil man nach vollständiger Carbonisierung und Aktivierung Kügelchen erhält, die im Inneren sehr offenporig sind. Das Schüttgewicht ist aber sehr wichtig, wenn man eine bestimmte Masse auf kleinerem Raum unterbringen will. Folglich sind "leichte" Kugeln, d.h. Produkte die mit einem geringem Schüttgewicht, weniger gefragt.

Eine vollständige Sulfonierung läßt sich nach dem in der Patentanmeldung DE 196 00 237 beschriebenen Verfahren insbesondere dann erreichen, wenn man sich der oberen Grenze des für die Schwefelsäuremenge angegebenen Bereichs nähert. Dabei muss jedoch auf viele Prozeßparameter wie z.B. ein sorgfältiges und relativ langes Temperaturprogramm sowie eine exakt dosierte Stickstoffspülung geachtet werden, weil nur die Feuchte, nicht aber die Schwefelsäure ausgetragen werden soll. Zudem verhalten sich nicht alle Ausgangsmaterialien gleich. Während beispielsweise Anionenaustauscher nach diesem Verfahren fast problemlos sulfoniert werden können, sind Vorstufen, d.h. die Polymerkügelchen ohne funktionelle Gruppen, viel schwieriger zu sulfonieren, und zwar unabhängig davon, ob sie in makroporöser oder gelförmiger Form vorliegen.

Aus der WO-A-96/21616 ist bei der Herstellung eines Kationenaustauschers bekannt Schwefelsäure zuzusetzen. Es wird beschrieben, dass bei dem dortigen erfindungsgemäßen Verfahren die Schwefelsäure in Form von konzentrierter Schwefelsäure genutzt wird. Es wird ferner erwähnt, dass auch Oleum an Stelle von Schwefelsäure einsetzbar ist. Weitere Angaben kann der Fachmann aus diesem Stand der Technik nicht entnehmen. Ein Nachteil des bekannten Verfahrens liegt darin, dass die Ausbeute hinsichtlich dem eingesetzten Produktionsaufwand relativ gering ist.

Aufgabe der vorliegenden Erfindung ist es ein Verfahren bereitzustellen, das die Herstellung kömiger Aktivkohle mit hoher Schüttdichte unter leicht zu handhabenden Verfahrensbedingungen mit verhältnismäßig geringem Aufwand und unabhängig von der Beschaffenheit der Ausgangswerkstoffe ermöglicht.

Die erfindungsgemäße Aufgabe wird durch ein Verfahren nach den Merkmalen des Anspruchs 1 gelöst.

Bei dem erfindungsgemäßen Verfahren wird die Schwefelsäure insbesondere die Mengen von 39 Gew.-% bis 83 Gew.-% berechnet also SO₃ und bezogen auf die Trockensubstanz der Matrix, eingesetzt.

Die Anmelderin hat nun gefunden, dass durch Zugabe von Oleum zur Schwefelsäure überraschend hohe Ausbeuten an Kugelkohle erreicht werden können. Dabei wird das Aufplatzen der Kügelchen vermieden, und es werden Produkte mit sehr hohem Schüttgewicht erhalten.

Die konzentrierte Schwefelsäure wird als ein Gemisch aus Schwefelsäure und Oleum im Verhältnis 3:1 bis 1:1 eingesetzt. Die einzelnen Komponenten des Gemisches, die Schwefelsäure und das Oleum, können zusammen, d.h. in bereits vorgemischter Form, oder getrennt voneinander, nacheinander oder gleichzeitig, zu der zu behandelnden Matrix gegeben werden. Vorzugsweise wird Oleum mit einem Gehalt an SO₃ von 20% bis 30% verwendet. Aber auch Oleum mit einem höheren Schwefeltrioxidgehalt kann für die erfindungsgemäßen Zwecke verwendet werden.

Die Verwendung von Oleum bietet den Vorteil, dass geringe Restwassermengen, wie z.B. Wasserspuren in der Matrix, durch das freie Schwefeltrioxid im Oleum sofort unter Bildung von Schwefelsäure gebunden werden.

Der erste Verfahrensstufe, die Schwelung, erfolgt bei Temperaturen bis etwa 700°C, Der Schwelvorgang kann z.B. in einem Drehrohrofen durchgeführt werden.

Die sich anschließende zweite Verfahrensstufe, die Aktivierung, wird insbesondere bei Temperaturen von 700 bis 900°C durchgeführt. Die Aktivierung wird im allgemeinen mit einem oxidierenden bzw. aktivierenden Gas wie z.B. Luftsauerstoff, CO₂ und/oder Wasserdampf durchgeführt. Die Aktivierung kann beispielsweise in einem Drehrohrofen oder in in Wirbelschicht erfolgen.

In einer besonderen Ausführungsform des erfindungsgemäßen Verfahrens werden die Schwelung und die Aktivierung in einem Arbeitsgang durchgeführt. Dabei kann der anfangs inerten Atmosphäre ab 700°C ein oxidierendes Gas zugegeben werden. Die Schwelung kann dabei auch schon in nichtinerter, sauerstoffhaltiger Atmosphäre durchgeführt werden. Dadurch wird eine Pseudographitisierung der Matrixkügelchen verhindert und die Aktivität zusätzlich erhöht. Insbesondere bei gelförmigen Ausgangsmaterialien wird durch eine Schwelung in leicht oxidativer Atmosphäre der Aktivierungsprozeß erleichtert.

Als Ausgangsmaterial wird vorzugsweise eine Styrol/Divinylbenzol-Copolymer-Matrix in Wasserfreier oder nahezu wasserfreier Form eingesetzt. Als Ausgangsmaterialien können z.B. Vorstufen von Anionen- oder Kationenaustauschern verwendet werden. Die z.B. als makroporöse Polymere oder Polymere vom Gel-Typ vorliegen können. Die Styrol/Divinylbenzol-Copolymer-Matrix kann beispielsweise auch in Form von Anionenaustauschem eingesetzt werden, die gegebenenfalls vor der Behandlung mit Schwefelsäure getrocknet werden.

Die vorliegende Erfindung wird durch das folgende Ausführungsbeispiel veranschaulicht, das die Erfindung aber keineswegs auf diese Ausführungsform beschränken soll.

### Beispiel

1 Kg Ausgangsmaterial für einen Kationenaustauscher vom Geltyp mit einem Divinylgehalt von ca. 4% wurden mit 500g konzentrierter Schwefelsäure benetzt und in einen Drehrohrofen der Fa. Plec eingefüllt. Anschließend wurden 500g Oleum hinzugefügt, und der Ofen wurde verschlossen. Während der gesamten Aufheizperiode auf 400°C wurde der Ofen mit einem Stickstoffstrom von 0,5l/min gespült. Zu diesem Zeitpunkt betrug die Ausbeute an geschweltem Material 80%. Anschließend wurde die Schwelung bis 875°C weitergeführt, wobei ein weiterer Gewichtsverlust von 8% eintrat Sodann wurde mit 75 Vol.-% Stickstoff und 25 Vol.% Wasserdampf bei 875°C während 90 Minuten aktiviert. Es wurden 502g Kugelkohle mit einer Rütteldichte von 0,74g/cm³ und einer spezifischen Oberfläche von 1180 cm²/g (BET) erhalten.

## Patentansprüche

1. Verfahren zur Herstellung von körniger Aktivkohle, bei dem man Kügelchen einer Styrol/Divinylbenzol-Copolymer-Matrix mit konzentrierter Schwefelsäure bei Temperaturen bis mindestens 750°C, vorzugsweise bis 900°C, schwelt und anschließend das Pyrolyseprodukt bei Temperaturen von 800 bis 900°C aktiviert, wobei die Schwefelsäure in einer Menge von mindestens 39 Gew.-%, berechnet als SO₃ und bezogen auf die Trockensubstanz der Matrix, eingesetzt wird und die Schwefelsäure teilweise durch Oleum ersetzt wird, **dadurch gekennzeichnet, daß** ein Gemisch aus Schwefelsäure und Oleum im Verhältnis von 3:1 bis 1:1 eingesetzt wird.

2. Verfahren nach Anspruch 1, **dadurch gekennzeichnet, dass** die Schwelung und die Aktivierung in einem Arbeitsgang durchgeführt werden.

3. Verfahren nach Anspruch 2, **dadurch gekennzeichnet, dass** der anfangs inerten Atmosphäre ab 750 bis 800°C ein oxidierendes Gas zugegeben wird.

4. Verfahren nach Anspruch 2, **dadurch gekennzeichnet, dass** die Schwelung und die Aktivierung unter einer sauerstoffhaltigen Atmosphäre durchgeführt werden.

## Claims

1. Method of producing granular active carbon, wherein beads of a styrene/divinylbenzene copolymer matrix are carbonised with concentrated sulphuric acid at temperatures up to at least 750° C, preferably up to 900° C, and subsequently the pyrolysis product is activated at temperatures of 800 to 900° C, the sulphuric acid being used in a quantity of at least 39 % by wt., calculated as SO₃ and relative to the dry substance of the matrix, and the sulphuric acid being partially replaced by oleum, **characterised in that** a mixture of sulphuric acid and oleum is used in the ratio of 3:1 to 1:1.

2. Method according to claim 1, **characterised in that** the carbonisation and the activation are accomplished in one operation.

3. Method according to claim 2, **characterised in that** an oxidising gas is added to the initially inert atmosphere from 750 to 800° C.

4. Method according to claim 2, **characterised in that** the carbonisation and the activation are accomplished in an oxygen-containing atmosphere.

## Revendications

1. Procédé d'obtention de charbon actif granuleux dans lequel on effectue la carbonisation à basse température de billettes d'une matrice de copolymère styrène/divinylbenzène avec de l'acide sulfurique concentré à des températures allant jusqu'à au moins 750°C, de préférence jusqu'à 900°C, et ensuite on active le produit de pyrolyse à des températures allant de 800 à 900°C, dans lequel l'acide sulfurique est mis en oeuvre en une quantité d'au moins 39 % en poids, calculé en tant que SO₃, et rapporté à la substance sèche de la matrice et dans lequel l'acide sulfurique est remplacé partiellement par de l'oléum,
**caractérisé en ce qu'**
on met en oeuvre un mélange à base d'acide sulfurique et d'oléum dans un rapport de 3 :1 à 1 :1.

2. Procédé selon la revendication 1,
**caractérisé en ce que**
la carbonisation à basse température et l'activation sont exécutés en une seule opération.

3. Procédé selon la revendication 2,
**caractérisé en ce qu'**
on ajoute à l'atmosphère au début inerte, à partir de 700 à 800°C, un gaz oxydant.

4. Procédé selon la revendication 2,
**caractérisé en ce qu'**
on effecue la carbonisation à basse température et l'activation sous une atmosphère contenant de l'oxygène.
